# EUROPÄISCHE PATENTSCHRIFT

(11) **EP 0 309 598 B1**
(45) Veröffentlichungstag und Bekanntmachung des Hinweises auf die Patenterteilung: **26.01.1994**
(21) Anmeldenummer: 87114171.9
(22) Anmeldetag: 29.09.1987
(51) Int. Cl.: F16H 57/04

(54) **Ein- oder mehrteilige Schutzverkleidung für Zugmittelgetriebe**
Single or multiple protective cover for an endless-belt transmission
Couvercle en une ou plusieurs parties pour transmission à courroie sans fin

(43) Veröffentlichungstag der Anmeldung: 05.04.1989
(73) Patentinhaber: Schmidt, Konrad, D-90587 Tuchenbach (DE)
(72) Erfinder: Schmidt, Konrad, D-90587 Tuchenbach (DE)
(74) Vertreter: Hafner, Dieter, Dr.rer.nat., Dipl.-Phys.

(56) Entgegenhaltungen:
- FR-A- 2 139 328
- FR-A- 2 139 329
- FR-A- 2 533 287
- US-A- 4 671 781

## Beschreibung

Die vorliegende Erfindung betrifft eine ein- oder mehrteilige Schutzverkleidung eines Zugmittelgetriebes gemäß dem Oberbegriff des Patentanspruches 1.

Eine derartige Schutzverkleidung ist aus der US-A-4 671 781 bekannt. Der Turboverdichter ist hierbei im Inneren der Schutzverkleidung angeordnet, wobei Kühlmedium von außen über einen Filter und eine Unterdruckeinlaßöffnung ins Innere der Schutzverkleidung eingesaugt wird. Der Turboverdichter besteht aus einem Lüfterrad, welches über die Kurbelwelle des Motors angetrieben wird. Das Lüfterrad läuft damit bei laufendem Motor ständig mit.

Aus FR-A-2 533 287 ist ein Kühlsystem eines Reduktionsgetriebes unter Verwendung von Luft als Kühlmedium bekannt. Hierbei wird über ein an der Außenseite der Schutzverkleidung angeordnetes Luftgebläse Luft in das Innere der Schutzverkleidung zur Kühlung des Reduktionsgetriebes eingeblasen. Das Luftgebläse wird ständig und mit gleicher Leistung betrieben, eine Steuerung bzw. Anpassung an den innerhalb der Schutzverkleidung vorherrschenden Überdruck erfolgt nicht.

Die Aufgabe der vorliegenden Erfindung besteht darin, eine gattungsgemäße Schutzverkleidung zu schaffen, welche die Möglichkeit eröffnet, den Energiebedarf zur Beaufschlagung des Inneren der Schutzverkleidung mit Kühlmedium wirksam zu reduzieren.

Diese Aufgabe wird bei der gattungsgemäßen Schutzverkleidung durch die kennzeichnenden Merkmale des Patentanspruches 1 gelöst. Die Unteransprüche betreffen vorteilhafte Ausgestaltungen der Erfindung. Die Erfindung bietet die Möglichkeit, wirksam Energie einzusparen, z.B. bei hoher Geschwindigkeit des Fahrzeuges oder Autobahnfahrten, bei der der aufgefangene Fahrtwind zur Erzeugung des Überdrucks innerhalb der Schutzverkleidung benutzt werden kann, wobei hierbei der Turboverdichter in seiner Leistung reduziert oder ganz abgestellt werden kann. Gleichzeitig weist jedoch unabhängig von dem jeweiligen Betrieb des Fahrzeuges die Innenseite der Schutzverkleidung ein unter Überdruck stehendes Kühlmedium auf, wodurch zum einen eine wirksame Kühlung, zum anderen ein Eindringen von Schmutzpartikeln vermieden wird.

Zusammenfassend läßt sich ferner feststellen, daß eine gemäß der Erfindung ausgebildete, ein- oder mehrteilige Schutzverkleidung insbesondere für Zugmittelgetriebe in Verbindung mit hochtourig laufenden Motoren, beispielsweise Kraftfahrzeugmotoren, brauchbar ist, darüber hinaus aber auch in all jenen Bereichen, in denen Zugmittelgetriebe einen hervorragenden Schutz gegenüber einer Beeinträchtigung durch Schmutzpartikeln u. dgl. Fremdkörper erfordern, wie dies vorallen Dingen bei Zahnriemengetrieben der Fall ist, wobei darüber hinaus eine Überhitzung der Getriebeteile, insbesondere des Riemens, vermieden werden muß.

Zur näheren Erläuterung der Erfindung, ihrer Vorteile und weiteren Merkmale dient die beigefügte Zeichnung. Im Rahmen eines Ausführungsbeispieles zeigen:
- Fig. 1: in schematischer Darstellung eine Frontansicht eines Zahnriemengetriebes für einen Kraftfahrzeugmotor, wobei dieses Zahnriemengetriebe durch eine Schutzverkleidung abgedeckt ist, die in Fig. 1 in aufgeschnittener Darstellung gezeigt ist;
- Fig. 2: eine teilweise Schnittansicht der Anordnung gemäß Fig. 1 nach der Linie I-I;
- Fig. 3: in schematischer Darstellung einen Regelkreis für eine Antriebseinrichtung für einen Turboverdichter, der in Verbindung mit der erfindungsgemäßen Schutzverkleidung verwendet wird.

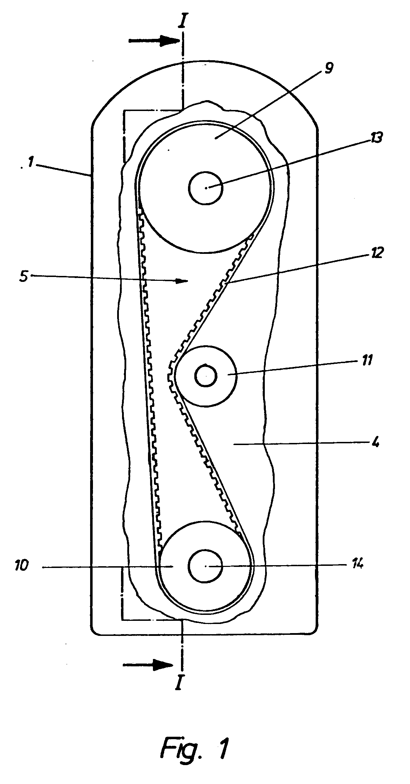

Wie aus der Fig. 1 ersichtlich ist, besteht ein von einer beispielsweise einteilig ausgebildeten Schutzverkleidung 1 abgedecktes Zahnriemengetriebe 5 im wesentlichen aus einer mit einer Nockenwelle 13 verbundenen Riemenscheibe 9, einer mit einer Kurbelwelle 14 verbundenen Riemenscheibe 10, einem Zahnriemen 12 sowie einer Spannrolle 11.

Die Schutzverkleidung 1 ist in der Fig. 1 teilweise frontseitig aufgeschnitten gezeigt, damit der Blick auf das Zahnriemengetriebe 5 freigegeben ist.

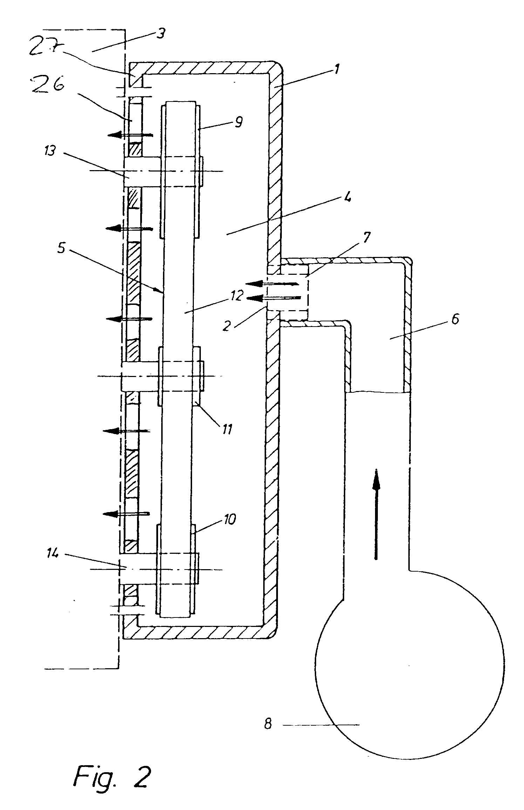

Aus der Fig. 2 ist dieses Zahnriemengetriebe von der Seite her zu sehen, wobei die Schutzverkleidung 1 gemäß der Linie I-I nach Fig. 1 geschnitten ist. Die Schutzverkleidung 1 ist beispielsweise an einer vorderen Stirnseite eines schematisch dargestellten Motorblockes 3 befestigt, wodurch zusammen mit der Wandung der Schutzverkleidung 1 ein Innenraum 4 gebildet ist, in welchem sich das Zahnriemengetriebe 5 befindet.

An der dem Motorblock 3 abgewendeten Frontseite der Schutzverkleidung 1 ist in der dortigen Wandung eine als Kühlmedium-Überdruckeinlaßöffnung ausgebildete Einlaßöffnung 2 angeordnet. Diese Einlaßöffnung 2 dient im vorliegenden Ausführungsbeispiel zum Einleiten eines Luftstromes in den Innenraum 4, wobei dieser Luftstrom von einem Turboverdichter 8, z.B. einem Radialgebläse erzeugt wird. Im Bereich der Einlaßöffnung 2 ist die Schutzverkleidung 1 mit einem nach außen ragenden Stutzen 7 versehen, mit dem eine Leitung 6 mit ihrem einen Ende verbunden ist, während das andere Ende dieser Leitung 6 zu dem Turboverdichter 8 führt.

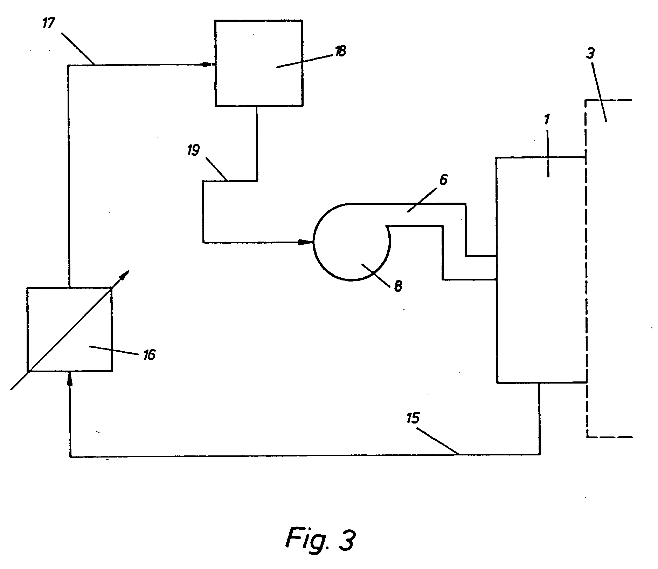

Durch den über die Leitung 6 dem Innenraum 4 der Schutzverkleidung 1 zugeführten Luftstrom wird dieser Innenraum sowie das darin enthaltene Zahnriemengetriebe 5 andauernd gekühlt und gleichzeitig wird in den Innenraum 4 ein im wesentlichen permanenter Überdruck erzeugt, aufgrund dessen ein Eintreten von Fremdkörperchen, Schmutzteilchen, Spritzwasser und dergl. mehr durch irgendwelche Luftspalte in der Schutzverkleidung 1 hindurch in den Innenraum 4 mit Sicherheit verhindert ist. Wie sich aus der Fig. 3 ersehen läßt, ist der Turboverdichter 8, der beispielsweise ein Axialgebläse oder ein Radialgebläse oder ein Diagonalgebläse sein kann, bzw. ein zum Antrieb des Turboverdichters 8 dienendes Antriebsaggregat 18 in einen Regelkreis (bzw. Stellkreis) geschaltet, mit dessen Hilfe ein vorgegebener, ständiger Überdruck in dem Innenraum 4 der Schutzverkleidung 1 gemäß Fig. 2 erzeugt wird. Bei diesem Regelkreis ist die Schutzverkleidung 1 über eine Messleitung 15 mit einem Regler 16 verbunden, der seinerseits über eine Leitung 17 mit dem Antriebsaggregat 18 verbunden ist. Der in dem Innenraum 4 der Schutzverkleidung 1 herrschende Druck wird dauernd gemessen und der entsprechende Messwert über die Leitung 15 dem Regler 16 zugeführt, in welchem durch einen Soll-/Istwert-Vergleich eine Regelgröße erzeugt wird, mit der das Antriebsaggregat 18 über die Leitung 17 beaufschlagt wird. Entsprechend dieser Regelgröße wird von dem Antriebsaggregat 18 aus über eine zu dem Turboverdichter 8 führende, zur Leistungsübertragung dienende Leitung 19 der Antrieb geregelt bzw.eingestellt und damit der Druck des der Schutzverkleidung 1 bzw. dem durch diesen und die vordere Stirnseite des Motorblockes 3 gebildeten Innenraum 4 zugeführten Luftstromes.

Um einen Druckausgleich des in den Innenraum 4 der Schutzverkleidung 1 unter Überdruck eingeleiteten gasförmigen Mediums zu gewährleisten, können, wie in Fig. 2 gezeigt, in der Schutzverkleidung 1, insbesondere in einem der Frontseite der Schutzverkleidung gegenüberliegenden Wandungsteil 27 eine oder mehrere Auslaßöffnungen 26 angeordnet sein, wobei dieses Wandungsteil 27 beispielsweise mit der Stirnseite eines Motorblockes 3 befestigt ist.

Im übrigen können, was aus den Fig. 1 bis 3 im einzelnen nicht ersichtlich ist, im Bereich der jeweiligen Einlaßöffnungen 2, Filter, insbesondere Staubfilter, angeordnet sein, für welche beispielsweise auch eine Verbindung z.B. zu einem Luftfilter eines Verbrennungsmotors vorgesehen sein kann.

## Patentansprüche

1. Ein- oder mehrteilige Schutzverkleidung eines Zugmittelgetriebes, insbesondere für Fahrzeugmotoren, Fahrzeugantriebe, Maschinen oder dergleichen, mit wenigstens einer in der Schutzverkleidung (1) angeordneten Einlaßöffnung (2), durch die ein gasförmiges Medium in einen das Zugmittelgetriebe (5) enthaltenden Innenraum (4) eindringen kann, wobei die Einlaßöffnung mit wenigstens einem das vorgefilterte Kühlmedium unter Überdruck abgebenden Turboverdichter (8) verbunden ist,
**dadurch gekennzeichnet,**
daß die Einlaßöffnung (2) als Kühlmedium-Überdruckeinlaßöffnung in der Wandung der Schutzverkleidung (1) ausgebildet ist, der Turboverdichter (8) eine eigene, gesonderte Antriebseinrichtung (18) aufweist und die Antriebseinrichtung (18) des Turboverdichters (8) in einen Regel- bzw. Stellkreis geschaltet ist, welcher in dem durch die Schutzverkleidung (1) gebildeten, das Zugmittelgetriebe (5) enthaltenden Innenraum (4) den tatsächlich vorherrschenden Druck mißt und einen vorgegebenen, ständigen Überdruck einstellt bzw. regelt.

2. Schutzverkleidung nach Anspruch 1,
**gekennzeichnet durch**
eine mit der Schutzverkleidung (1) verbundene Leitung (6), die mit ihrem einen Ende an die entsprechende Einlaßöffnung (2) in der Schutzverkleidung (1) und mit ihrem anderen Ende an den Turboverdichter (8) angeschlossen ist.

3. Schutzverkleidung nach Anspruch 2,
**dadurch gekennzeichnet,**
daß die Schutzverkleidung (1) im Bereich der jeweiligen Einlaßöffnung (2) mit einem nach außen ragenden Stutzen (7) versehen ist, an den das eine Ende der Leitung (6) angeschlossen ist.

4. Schutzverkleidung nach mindestens einem der vorangehenden Ansprüche,
**dadurch gekennzeichnet,**
daß der Turboverdichter (8) ein Axialgebläse ist.

5. Schutzverkleidung nach mindestens einem der Ansprüche 1 - 3,
**dadurch gekennzeichnet,**
daß der Turboverdichter (8) ein Radialgebläse ist.

6. Schutzverkleidung nach mindestens einem der Ansprüche 1 - 3,
**dadurch gekennzeichnet,**
daß der Turboverdichter (8) ein Diagonalgebläse ist.

7. Schutzverkleidung nach mindestens einem der vorangehenden Ansprüche,
**dadurch gekennzeichnet,**
daß im Bereich der Einlaßöffnung(en) (2) jeweils ein Filter, insbesondere Staubfilter, angeordnet ist.

8. Schutzverkleidung nach Anspruch 7,
**dadurch gekennzeichnet,**
daß eine Verbindung der Einlaßöffnung(en) (2) zu einem Luftfilter eines Verbrennungsmotors vorgesehen ist.

9. Schutzverkleidung nach mindestens einem der vorangehenden Ansprüche,
**dadurch gekennzeichnet,**
daß in der Schutzverkleidung (1) wenigstens eine Auslaßöffnung (26) für einen Druckausgleich des in den Innenraum (4) der Schutzverkleidung (1) eingeleiteten gasförmigen Mediums vorgesehen ist.

10. Schutzverkleidung nach Anspruch 9,
**dadurch gekennzeichnet,**
daß die Auslaßöffnung(en) (26) in einem der Frontseite des der Schutzverkleidung (1) gegenüberliegenden Wandungsteils (27) angeordnet ist (sind).

## Claims

1. Single or multi-layered protective covering of a traction mechanism gear unit, in particular for motor vehicles, vehicle drives, machines or the like, having at least one inlet opening (2) which is disposed in the protective covering (1) and through which a gaseous medium can penetrate into an inner chamber (4) housing the traction mechanism gear unit (5), the inlet opening being connected to at least one turbocompressor (8) discharging the pre-filtered coolant under excess pressure, characterised in that the inlet opening (2) is in the form of a coolant - excess pressure inlet opening in the wall of the protective covering (1), the turbocompressor (8) comprises its own, separate drive device (18), and the drive device (18) of the turbocompressor (8) is connected in a regulating or control circuit which measures the pressure actually prevailing in the inner chamber (4), formed by the protective covering (1) and containing the traction mechanism gear unit (5), and sets or regulates a predetermined, constant excess pressure.

2. Protective covering according to Claim 1, characterised by a pipe (6) which is connected to the protective covering (1), of which one end is connected to the corresponding inlet opening (2) in the protective covering (1), and of which the other end is connected to the turbocompressor (8).

3. Protective covering according to Claim 2, characterised in that, in the vicinity of the respective inlet opening (2), the protective covering (1) is provided with an outwardly projecting connection piece (7) to which one end of the pipe (6) is connected.

4. Protective covering according to at least one of the preceding claims, characterised in that the turbocompressor (8) is an axial fan.

5. Protective covering according to at least one of Claims 1 - 3, characterised in that the turbocompressor (8) is a radial fan.

6. Protective covering according to at least one of Claims 1 - 3, characterised in that the turbocompressor (8) is a diagonal fan.

7. Protective covering according to at least one of the preceding claims, characterised in that a filter, in particular a dust filter, is disposed in each case in the vicinity of the inlet opening(s) (2).

8. Protective covering according to Claim 7, characterised in that a connection is provided between the inlet opening (s) (2) and an air filter of an internal combustion engine.

9. Protective covering according to at least one of the preceding claims, characterised in that at least one outlet opening (26) for equalising the pressure of the gaseous medium introduced into the inner chamber (4) of the protective covering (1) is provided in the latter.

10. Protective covering according to Claim 9, characterised in that the outlet opening (s) (26) is (are) disposed in a wall portion (27) opposite the front side of the protective casing (1).

## Revendications

1. Capot, en une ou plusieurs parties, de protection d'une transmission à courroie sans fin, notamment pour moteur de véhicule automobile, groupe propulseur de véhicule automobile, machine ou analogue, comprenant au moins un orifice d'entrée (2) qui est ménagé dans le capot de protection (1) et par lequel un fluide gazeux peut pénétrer dans une cavité (4) contenant la transmission à courroie sans fin (5), cet orifice d'entrée étant relié à au moins un turbocompresseur (8) refoulant sous une certaine surpression un fluide de refroidissement filtré au préalable, caractérisé en ce que l'orifice d'entrée (2) est réalisé dans la paroi du capot de protection (1) sous la forme d'un orifice d'entrée de fluide de refroidissement en surpression, en ce que le turbocompresseur (8) comporte son propre dispositif spécial d'entraînement (18) et en ce que ce dispositif d'entraînement (18) du turbocompresseur (8) est monté dans un circuit de réglage ou de régulation qui mesure la pression régnant effectivement dans la cavité (4) formée par le capot de protection (1) et contenant la transmission à courroie sans fin (5) et qui assure le réglage ou la régulation d'une surpression préfixée permanente.

2. Capot de protection suivant la revendication 1, caractérisé en ce qu'il est relié au capot de protection (1) une tuyauterie (6) qui est raccordée par une première extrémité à l'orifice d'entrée (2) correspondant ménagé dans le capot de protection (1) et par l'autre extrémité au turbocompresseur (8).

3. Capot de protection suivant la revendication 2, caractérisé en ce que, dans la zone de chaque orifice d'entrée (2), le capot (1) est pourvu d'une tubulure (7) qui fait saillie vers l'extérieur et sur laquelle est raccordée la première extrémité de la tuyauterie (6).

4. Capot de protection suivant au moins l'une des revendications précédentes, caractérisé en ce que le turbocompresseur (8) est une soufflante axiale.

5. Capot de protection suivant au moins l'une des revendications 1 à 3, caractérisé en ce que le turbocompresseur (8) est une soufflante radiale.

6. Capot de protection suivant au moins l'une des revendications 1 à 3, caractérisé en ce que le turbocompresseur (8) est une soufflante oblique.

7. Capot de protection suivant au moins l'une des revendications précédentes, caractérisé en ce que, dans la zone de l'orifice d'entrée (2) ou de chacun des orifices d'entrée, il est disposé un filtre, notamment un filtre à poussières.

8. Capot de protection suivant la revendication 7, caractérisé en ce qu'il est prévu une liaison du ou des orifices d'entrée (2) avec un filtre à air d'un moteur à combustion.

9. Capot de protection suivant au moins l'une des revendications précédentes, caractérisé en ce que, dans ce capot de protection (1), il est prévu au moins un orifice de sortie (26) servant à un équilibre de pression du fluide gazeux introduit dans la cavité (4) du capot de protection (1).

10. Capot de protection suivant la revendication 9, caractérisé en ce que le ou les orifices de sortie (26) est ou sont disposés dans une partie de paroi (27) disposée en regard de la face frontale du capot de protection (1).
